# EUROPÄISCHE PATENTSCHRIFT

(11) **EP 0 808 344 B1**
(45) Veröffentlichungstag und Bekanntmachung des Hinweises auf die Patenterteilung: **08.09.1999**
(21) Anmeldenummer: 96902220.1
(22) Anmeldetag: 02.02.1996
(51) Int. Cl.: C09B 67/16, C09B 67/50, G03G 5/06

(54) **VERFAHREN ZUR HERSTELLUNG VON ELEKTROFOTOGRAFISCH AKTIVEM TITANYLPHTHALOCYANIN**
PROCESS FOR PRODUCING ELECTROPHOTOGRAPHICALLY ACTIVE TITANYLPHTHALOCYANINE
PROCEDE POUR PRODUIRE DU TITANYLPHTALOCYANINE A ACTION ELECTROPHOTOGRAPHIQUE

(30) Priorität: 08.02.1995 DE 19505784
(43) Veröffentlichungstag der Anmeldung: 26.11.1997
(73) Patentinhaber: Syntec Gesellschaft für Chemie und Technologie der Informationsaufzeichnung mbH, 06766 Wolfen (DE)
(72) Erfinder: RICHTER, Andreas, M., D-06126 Halle (DE); ACKERMANN, Roland, D-06749 Bitterfeld (DE); LUTZ, Manfred, D-59581 Warstein (DE); HUMPERT, Hans-Josef, D-59609 Anröchte (DE)
(74) Vertreter: Walter, Wolf-Jürgen
(86) Internationale Anmeldenummer: DE9600207
(87) Internationale Veröffentlichungsnummer: WO9624638

(56) Entgegenhaltungen:
- EP-A- 0 460 565
- EP-A- 0 516 433
- CHEMICAL ABSTRACTS, vol. 93, no. 23, 8.Dezember 1980 Columbus, Ohio, US; abstract no. 217372c, BENNETT H.P.J. ET AL: "The use of perfluorinated carboxylic acids in the reverse-phase HPLC of peptides." Seite 236; XP002004445 & J. LIQ. CHROMATOGR, Bd. 3, Nr. 9, 1980, Seiten 1353-1365,

## Beschreibung

Die Erfindung betrifft ein neues Verfahren zur Herstellung von Titanylphthalocyanin-Modifikationen. Diese hochaktiven Formen können in der Elektrofotografie als bildgebende Komponente eingesetzt werden.

Der Einsatz von Titanylphthalocyanin in der Elektrofotografie ist seit längerer Zeit bekannt (z. B. US 3825422). Bei der Beschäftigung mit dieser Verbindung hat sich herausgestellt, daß die elektrofotografische Aktivität von ihrer Morphologie abhängt. Die unterschiedlichen Modifikationen wurden von den einzelnen Herstellern unterschiedlich bezeichnet. [Form I (oder β bzw. A), Form II (oder α bzw. B), Form III (oder C bzw. m), Form IV (oder y bzw. "new type"), Form X, Form Z1 und Form Z2]. Von Bedeutung ist, daß die elektrofotografisch weniger aktiven Formen (z.B. die α- oder die β-Form) durch geeignete Behandlung in elektrofotografisch aktivere Formen (vorzugsweise in die Form IV) umgewandelt werden können. Dies kann, wie bekannt, bereits durch das seit langem bekannte Acid-pasting geschehen, bei dem ein Phthalocyanin in konzentrierter Schwefelsäure gelöst und durch Zusatz von Wasser wieder ausgefällt wird. Dabei ist es schwierig, die verschiedenen Modifikationen in reiner Form zu erhalten. Ein Verfahren zur Herstellung der Form IV ist beispielsweise in der DE 3823363 beschrieben worden.

Für die Herstellung von Titanylphthalocyanin allgemein scheint offensichtlich der Weg aus Diimino-isoindolenin und Ti(OR)₄ (R=C₁-C₆) vorteilhafter zu sein als aus Phthalodinitril und Titanylchlorid. Ausführlich beschrieben ist die Herstellung verschiedener polymorpher Titanylphthalocyanin-Formen in der EP-A-460565 sowie Zusatzanmeldungen dazu. Die Herstellung der Form IV erfolgt dabei aus rohem Titanylphthalocyanin mit Trifluoressigsäure/Methylenchlorid als Lösungsmittel und nachfolgender Ausfällung des Titanylphthalocyanin mit einem Lösungsmittelsystem, insbesondere einem Alkohol (MeOH) und Wasser. Anschließend wird das Fällungsprodukt gewaschen und getrocknet. In dem später veröffentlichen Zusatzpatent (EP-A-508772) wird offenbart, die Form I aus 1,3-Diiminoisoindolenin und Titantetrabutoxid herzustellen, diese in Trifluoressigsäure zu lösen, um zu der Form X zu gelangen, und die Form X durch Behandlung mit Halobenzenen, speziell Chlorbenzen, in die Form IV umzuwandeln.

Wesentliche Merkmale der Form IV sind gemäß Fujimaki, Y. et al, J.Imag.Techn. 17 (1991) 202 ein Dunkelabfall von 13 V/sec (Aufladungspotential -600 V), eine Halbfallenergie E/2 von 0,75 erg/cm² (bei 800 mm) und ein Restpotential bei 10 erg/cm² von 70 V. Kennzeichnend für die Form IV sind weiterhin Peaks im Röntgenbeugungsdiagramm bei 2θ bei 9,4° und 27,3°.

Der Erfindung liegt die Aufgabe zugrunde, ein neues Verfahren zur Herstellung von elektrofotografisch aktivem Titanylphthalocyanin bereitzustellen.

Erfindungsgemäß besteht das Verfahren zur Herstellung von elektrofotografisch aktivem Titanylphthalocyanin darin, daß man rohes, elektrofotografisch inaktives Titanylphthalocyanin in einem Gemisch von Pentafluorpropionsäure und einem Lösungsmittel der Gruppe halogenierte Alkane, halogenierte Aromaten oder halogenierte Alkane und/oder halogenierte Aromaten und Sulfonsäuren oder Sulfonsäuregemische löst, und das Titanylphthalocyanin mit Wasser, gegebenenfalls in Anwesenheit eines weiteren polaren organischen Lösungsmittels ausfällt.

Bei dem hergestellten elektrofotografisch aktiven Titanylphthalocyanin handelt es sich offensichtlich um ein solches vom Typ IV, da es dessen charakteristische Merkmale im Röntgenbeugungsdiagramm aufweist, d.h. im Röntgenbeugungsdiagramm zeigt es charakteristische Beugungswinkel bei 9,4° und 27,3°.

Das bei dem erfindungsgemäßen Verfahren eingesetzte halogenierte Alkan ist ein Polychlor- oder Polybromalkan, vorzugsweise ausgewählt unter Methylenchlorid, Dichlorethan, Trichlormethan, Trichlorethan, insbesondere Methylenchlorid. Ein eingesetzter halogenierter Aromat ist beispielsweise Chlorbenzol.

Die ebenfalls als Lösungsmittel in Kombination mit einem halogenierten Alkan und/oder halogenierten Aromaten eingesetzte Sulfonsäure ist eine aliphatische oder eine aromatische Sulfonsäure, insbesondere eine fluorierte Sulfonsäure. Es können neben Monosulfonsäuren auch Disulfonsäuren, Carboxysulfonsäuren, Sulfophosphonsäuren eingesetzt werden. Besonders vorteilhafte Sulfonsäuren sind ausgewählt unter p-Toluensulfonsäure, Methansulfonsäure, Trifluormethansulfonsäure, vorzugsweise p-Toluensulfonsäure oder Methansulfonsäure oder ein Gemisch dieser beiden. Es können jedoch auch andere Sulfonsäuregemische eingesetzt werden.

Das Verhältnis von Pentafluorpropionsäure zu halogeniertem Alkan/Aromaten zu Sulfonsäure bzw. Sulfonsäuregemisch liegt im Bereich von 1 : 2 bis 6 : 0,1 bis 4, vorzugsweise im Bereich von 1 : 2,5 bis 4,5 : 1 bis 2,5.

Bevorzugt eingesetzt als Ausgangsprodukt wird Titanylphthalocyanin, das aus Diiminoisoindolenin hergestellt wurde.

Die Fällung des in dem oben beschriebenen Lösungsmittel(gemisch) gelösten Titanylphthalocyanins kann in Wasser erfolgen, wird jedoch vorzugsweise mit einem Gemisch von Methanol:Wasser durchgeführt, wobei der Anteil von Methanol im Bereich von 40 bis 60 % liegt, insbesondere im Bereich von 45 bis 55 %, vorzugsweise beträgt das Verhältnis 1:1.

Gegenüber dem bisherigen Aktivierungsverfahren mit Trifluoressigsäure und Methylenchlorid zeigt das vorliegende Verfahren eine wesentlich bessere Raum-Zeit-Ausbeute, insbesondere dann, wenn mit Pentafluorpropionsäure, Methylenchlorid und einem Gemisch von Methansulfonsäure und Toluensulfonsäure gearbeitet wird. Darüber hinaus kann als Ausgangsmaterial weniger reines Titanylphthalocyanin verwendet werden, wodurch sich wirtschaftliche Vorteile ergeben.

überraschenderweise zeigt sich insbesondere gegenüber der Darstellung in der EP-A-460565, daß
1) die Lösung in einem anderen Lösungsmittelsystem möglich ist, und
2) die Ausfällung mit dem Lösungsmittelsystem Methylalkohol/Wasser im angegebenen Mischungsverhältnis 60:40 bis 40:60 nicht zum Typ X führt (siehe Tabelle 2 und insbesondere Tabelle 3 in der EP-A-460565), sondern zum Typ IV.

Bei Ausfällung nur mit Wasser wird ein hoher Anteil an Typ IV erhalten.

Die Erfindung soll durch Beispiele näher erläutert werden.

### Beispiel 1

10 g Titanylphthalocyanin wurden in einem Gemisch von 60 ml Pentafluorpropionsäure (PFPS) und 240 ml Methylenchlorid (MeCl) gelöst. Die dunkelgrüne Lösung wurde in 1,5 l eines gut gerührten Gemisches von Methanol und Wasser (1:1) gegossen. Als die Fällung beendet war, wurde das Gemisch über eine Glasfritte filtriert. Das nachfolgende Waschen mit Wasser (viermal mit 1 l) gefolgt von einem Waschen mit MeCl (0,5 l) und Aceton (0,5 1) und Trocknen im Vakuum ergab 9,9 g tiefblaues Titanylphthalocyanin mit den elektrofotografischen Eigenschaften, die in Tabelle 1 aufgeführt sind.

### Beispiel 2

10 g Titanylphthalocyanin wurden in einem Gemisch von 15 ml PFPS und 60 ml MeCl und 75 ml einer 30 %igen Lösung von p-Toluensulfonsäure in Chlorbenzen gelöst. Die dunkelgrüne Lösung wurde in 2 l eines gut gerührten Gemisches von Methanol und Wasser (1:1) gegossen. Als die Fällung beendet war, wurde das Gemisch über eine Glasfritte filtriert. Die nachfolgende Wäsche in gleicher Weise wie in Beispiel 1 ergab tiefblaues Titanylphthalocyanin mit den in Tabelle 1 aufgeführten elektrofotografischen Eigenschaften.

### Beispiel 3

10 g Titanylphthalocyanin wurden in einem Gemisch von 15 ml PFPS, 60 ml MeCl und 20 ml Methansulfonsäure gelöst. Die dunkelgrüne Lösung wurde in 1,5 l eines gut gerührten Gemisches von Methanol und Wasser (1:1) gegossen. Als die Fällung beendet war, wurde das Gemisch über eine Glasfritte abfiltriert. Die nachfolgende Wäsche in gleicher Weise wie in Beispiel 1 und Trocknung im Vakuum ergab 4,9 g eines tiefblauen Titanylphthalocyanin mit dem in Tabelle 1 aufgeführten elektrofotografischen Eigenschaften.

### Beispiel 4

Es wurde wie in Beispiel 3 gearbeitet, jedoch die Fällung mit einem Gemisch Methanol:Wasser von 60:40 durchgeführt. Nach dem Filtrieren, dem Waschen und der Trocknung erhielt man tiefblaues Titanylphthalocyanin mit den gewünschten elektrofotografischen Eigenschaften wie im Beispiel 3.

### Beispiel 5

Es wurde wie im Beispiel 3 gearbeitet, mit Ausnahme dessen, daß anstelle der Methansulfonsäure ein Gemisch von Trifluormethansulfonsäure und Toluensulfonsäure im Verhältnis 1:2 und in einer Menge von 15 ml eingesetzt wurde. Nach dem Filtrieren, dem Waschen und der Trocknung erhielt man tiefblaues Titanylphthalocyanin mit den gewünschten elektrofotografischen Eigenschaften wie im Beispiel 3.

Die elektrofotografischen Eigenschaften der nach den verschiedenen Verfahren hergestellten Titanylphthalocyanine wurden in einem Doppelschichtsystem bestimmt. Dazu wurde eine aluminisierte Polyesterunterlage mit einer Dispersion des Titanylphthalocyanins in Polycarbonat/Methylenchlorid beschichtet. Die auf diese Weise nach dem Trocknen erzeugte CGL wurde mit einer Lösung von N,N'-Diphenyl-N,N'-di-(m-tolyl)-benzidin in Polycarbonat/Methylenchlorid beschichtet und nach dem Trocknen vermessen.

**Tabelle 1**

| Produkt nach Beispiel | U_{D}[V/3sec] | U₀[V] | E_{0,5}[µJ/cm⁻²] | U_{R}[V] |
|---|---|---|---|---|
| 1 | 32 | 930 | 0,15 | < 10 |
| 2 | 25 | 920 | 0,13 | < 10 |
| 3 | 30 | 870 | 0,12 | < 10 |

Darin bedeuten
- U_{D} =: Dunkelabfall
- U₀ =: Aufladepotential
- E_{0,5} =: Lichtmenge, die notwendig ist, U₀ auf 50% zu reduzieren
- U_{R} =: Restpotential mit 6µJcm⁻² Weißlicht

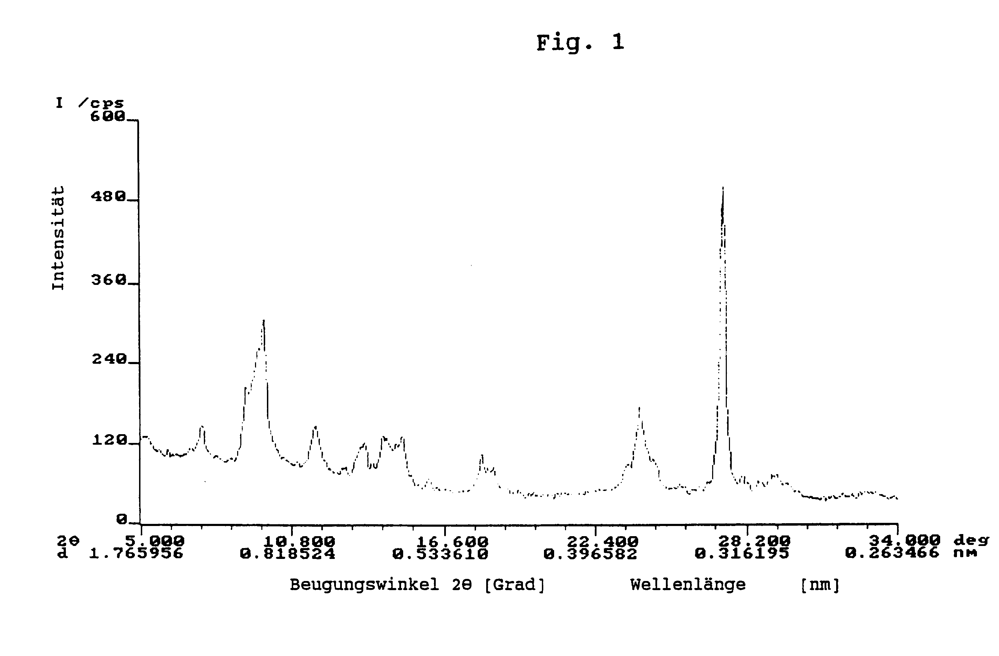

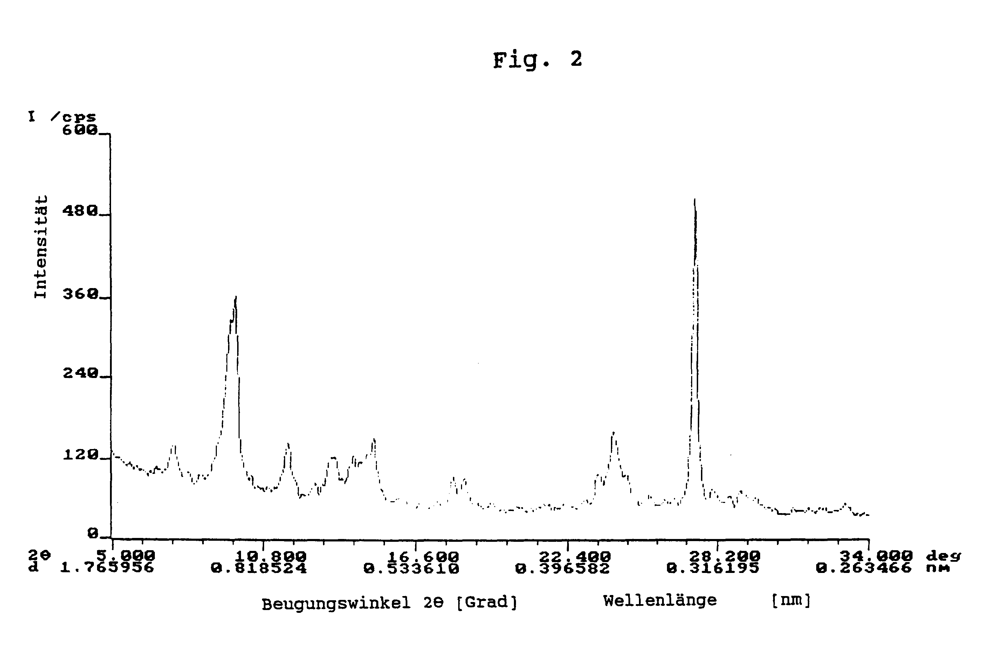

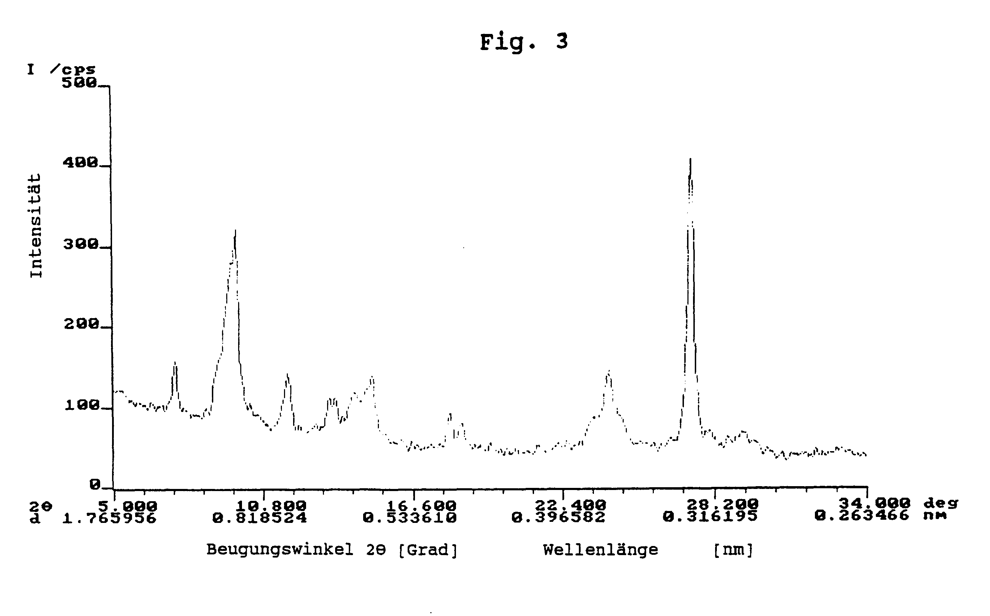

Die hergestellten Produkte gemäß Beispiel 1 bzw. 2 bzw. 3 zeigen die Röntgenbeugungsspektren gemäß Fig. 1 bzw. Fig. 2 bzw. Fig. 3.

## Patentansprüche

1. Verfahren zur Herstellung von elektrofotografisch aktivem Titanylphthalocyanin, dadurch gekennzeichnet, daß man Titanylphthalocyanin in einem Gemisch von Pentafluorpropionsäure und einem Lösungsmittel der Gruppe löst, die aus (1) halogenierten Alkanen, (2) halogenierten Aromaten und (3) einer Kombination von halogenierten Alkanen und/oder halogenierten Aromaten und Sulfonsäuren oder Sulfonsäuregemischen besteht, und das Titanylphthalocyanin mit Wasser, gegebenenfalls in Anwesenheit eines weiteren polaren organischen Lösungsmittels ausfällt.

2. Verfahren nach Anspruch 1, dadurch gekennzeichnet, daß das halogenierte Alkan ausgewählt ist unter Methylenchlorid, Dichlorethan, Trichlormethan und Trichlorethan, und es vorzugsweise Methylenchlorid ist.

3. Verfahren nach Anspruch 1, dadurch gekennzeichnet, daß die Sulfonsäure eine aliphatische Sulfonsäure ist, ausgewählt unter Methansulfonsäure, Trifluormethansulfonsäure.

4. Verfahren nach Anspruch 1, dadurch gekennzeichnet, daß die Sulfonsäure eine aromatische Sulfonsäure ist, ausgewählt unter Benzensulfonsäure, p-Toluensulfonsäure, 1-Naphthalinsulfonsäure, 2-Naphthalinsulfonsäure, insbesondere p-Toluensulfonsäure ist.

5. Verfahren nach Anspruch 1, dadurch gekennzeichnet, daß die Sulfonsäure ein Gemisch von 2 oder mehreren Sulfonsäuren ist, vorzugsweise ein Gemisch von p-Toluensulfonsäure und Methansulfonsäure.

6. Verfahren nach Anspruch 1, dadurch gekennzeichnet, daß die Fällung mit einem Gemisch polares organisches Lösungsmittel/Wasser erfolgt.

7. Verfahren nach Anspruch 6, dadurch gekennzeichnet, daß die Fällung mit einem Gemisch Methanol/Wasser im Bereich von 40 bis 60 Vol-% Methanol erfolgt, vorzugsweise im Bereich von 45 bis 55 Vol-% Methanol, insbesondere im Verhältnis 1:1.

8. Verfahren nach Anspruch 1, dadurch gekennzeichnet, daß das eingesetzte Titanylphthalocyanin aus Diiminoisoindolenin hergestellt ist.

## Claims

1. A process for producing electrophotographically active titanylphthalocyanine, characterized in that titanylphthalocyanine is dissolved in a mixture of pentafluoropropionic acid and a solvent from the group comprising (1) halogenated alkanes, (2) halogenated aromatics and (3) a combination of halogenated alkanes and/or halogenated aromatics and sulphonic acids or sulphonic acid mixtures; and by precipitating the titanylphthalocyanine with water, if necessary in the presence of a further polar organic solvent.

2. A process according to claim 1, characterized in that the halogenated alkane is selected from among methylene chloride, dichloroethane, trichloromethane and trichloroethane; and that it is preferably methylene chloride.

3. A process according to claim 1, characterized in that the sulphonic acid is an aliphatic sulphonic acid, selected from among methanesulphonic acid, trifluoromethanesulphonic acid.

4. A process according to claim 1, characterized in that the sulphonic acid is an aromatic sulphonic acid, selected from among benzenesulphonic acid, p-toluenesulphonic acid, 1-napthalenesulphonic acid, 2-napthalenesulphonic acid, in particular p-toluenesulphonic acid.

5. A process according to claim 1, characterized in that the sulphonic acid is a mixture of 2 or more sulphonic acids, preferably a mixture of p-toluenesulphonic acid and methanesulphonic acid.

6. A process according to claim 1, characterized in that precipitation takes place in a mixture of polar organic solvent/water.

7. A process according to claim 6, characterized in that precipitation takes place in a mixture of methanol/water in the range of 40 to 60% vol. methanol, preferably in the range of 45 to 55% vol. methanol, in particular at a ratio of 1:1.

8. A process according to claim 1, characterized in that the titanylphthalocyanine used is made from diimino-isoindol.

## Revendications

1. Procédé pour la fabrication de titanylphtalocyanine active au plan électrophotographique, caractérisé en ce qu'on dissout de la titanylphtalocyanine dans un mélange d'acide pentafluoropropionique et un solvant du groupe qui se compose d'alcanes halogénés (1), d'aromatiques halogénés (2) et d'une combinaison d'alcanes halogénés et/ou d'aromatiques halogénés et d'acides sulfoniques ou de mélanges d'acide sulfonique, et qu'on précipite la titanylphtalocyanine avec de l'eau, éventuellement en présence d'un autre solvant organique polaire.

2. Procédé selon la revendication 1, caractérisé en ce que l'alcane halogéné est choisi entre le chlorure de méthylène, le dichloréthane, le trichlorméthane et le trichloréthane, et que cet alcane est de préférence du chlorure de méthylène.

3. Procédé selon la revendication 1, caractérisé en ce que l'acide sulfonique est un acide sulfonique aliphatique sélectionné entre l'acide sulfonique de méthane et l'acide sulfonique de trifluorométhane.

4. Procédé selon la revendication 1, caractérisé en ce que l'acide sulfonique est un acide sulfonique aromatique sélectionné entre l'acide sulfonique de benzène, l'acide sulfonique de p-toluène, l'acide sulfonique de 1-naphthaline, l'acide sulfonique de 2-naphthaline et est en particulier de l'acide sulfonique de p-toluène.

5. Procédé selon la revendication 1, caractérisé en ce que l'acide sulfonique est un mélange de 2 ou plusieurs acides sulfoniques, de préférence un mélange d'acide sulfonique de p-toluène et d'acide sulfonique de méthane.

6. Procédé selon la revendication 1, caractérisée en ce que la précipitation s'effectue avec un mélange de solvant/eau organique polaire.

7. Procédé selon la revendication 6, caractérisé en ce que la précipitation s'effectue avec un mélange de méthanol/eau dans la plage de 40 à 60 % de volume de méthanol, de préférence dans la plage de 45 à 55 % de volume de méthanol, en particulier dans le rapport 1/1.

8. Procédé selon la revendication 1, caractérisé en ce que la titanylphtalocyanine utilisée est fabriquée à partir de diiminoisoindolénine.
